(19) Europäisches Patentamt

European Patent Office

Office européen des brevets

(11) **EP 0 876 594 B1**

(12) **FASCICULE DE BREVET EUROPEEN**

(45) Date de publication et mention
de la délivrance du brevet:
**11.06.2003 Bulletin 2003/24**

(21) Numéro de dépôt: **96934976.0**

(22) Date de dépôt: **25.10.1996**

(51) Int Cl.$^7$: **G01N 21/35**

(86) Numéro de dépôt international:
**PCT/FR96/01675**

(87) Numéro de publication internationale:
**WO 97/015818 (01.05.1997 Gazette 1997/19)**

(54) **FILTRE FABRY-PEROT ACCORDABLE POUR DETERMINER UNE CONCENTRATION DE GAZ**

ABSTIMMBARES FABRY-PEROT -FILTER ZUR MESSUNG DER GASKONZENTRATION

TUNABLE FABRY-PEROT FILTER FOR DETERMINING GAS CONCENTRATION

(84) Etats contractants désignés:
**DE FI FR GB**

(30) Priorité: **27.10.1995 FR 9512742**

(43) Date de publication de la demande:
**11.11.1998 Bulletin 1998/46**

(73) Titulaire: **SCHLUMBERGER INDUSTRIES S.A.**
**92120 Montrouge (FR)**

(72) Inventeurs:
• **GRASDEPOT, François**
**F-92260 Fontenay-aux-Roses (FR)**
• **SUSKI, Jan**
**F-92160 Antony (FR)**

(74) Mandataire: **Feray, Valérie et al**
**Feray Lenne Conseil**
**44/52, Rue de la Justice**
**75020 Paris (FR)**

(56) Documents cités:
**EP-A- 0 219 359**        **EP-A- 0 608 049**
**US-A- 4 553 816**        **US-A- 4 983 824**

• **7TH INTERNATIONAL CONFERENCE ON**
**SOLID-STATE SENSORS AND ACTUATORS,**
**1994, pages 826-829, XP000568195**
**Y.MATSUMOTO ET AL.: "Low drift integrated**
**capacitive accelerometer with PLL servo**
**technique" cité dans la demande**

# Description

L'invention est relative à un filtre pour un rayonnement électromagnétique qui présente une densité spectrale modifiée par un gaz, comprenant un corps qui est transparent audit rayonnement électromagnétique au moins dans sa partie traversée par le rayonnement, ladite partie comprenant au moins deux portions qui possèdent deux surfaces en regard sensiblement planes et parallèles entre elles, séparées l'une de l'autre par un milieu ne présentant pas d'interférence spectrale avec le gaz, l'une desdites portions, appelée première portion, étant mobile suivant une direction sensiblement perpendiculaire au couple de surfaces en regard.

Un filtre qui possède ces caractéristiques est connu du document EP 0 608 049.

Dans ce document un rayonnement électromagnétique, et plus particulièrement un rayonnement optique, en provenance d'une source lumineuse traverse une cellule contenant un gaz et voit sa densité spectrale modifiée par la présence des raies d'absorption du gaz.

Le rayonnement optique ainsi modifié passe dans un filtre optique du type interféromètre de Fabry-Pérot constitué d'un élément mobile disposé en regard d'un élément fixe. Les deux éléments définissent entre leurs surfaces respectives en regard une cavité.

L'épaisseur initiale de la cavité est choisie pour que le filtre soit accordé sur la bande d'absorption du gaz.

En aval du filtre, un détecteur reçoit le rayonnement transmis par le filtre accordé et en détermine l'énergie qui est représentative de la concentration de gaz. Cette énergie est fonction de la longueur d'onde du gaz.

En outre, une tension est appliquée entre les deux surfaces en regard dans la cavité afin de déplacer l'élément mobile et donc de faire varier l'épaisseur de celle-ci, ce qui a pour effet de déplacer la transmission spectrale du filtre afin qu'elle ne soit plus accordée sur la bande d'absorption du gaz.

Ainsi, on obtient sur le détecteur une énergie de rayonnement dite de référence car elle ne dépend plus de la longueur d'onde du gaz.

Toutefois, les sources lumineuses couramment utilisées sont rarement monochromatiques et présentent de ce fait une répartition spectrale couvrant une plage de longueurs d'onde de part et d'autre de la longueur d'onde $\lambda_0$ qui correspond à une raie d'absorption du gaz.

De plus, il est très fréquent que le gaz dont on cherche à déterminer la concentration ne soit pas pur mais mélangé à d'autres gaz appelés gaz parasites ou interférents qui possèdent des raies d'absorption pour des longueurs d'ondes inscrites dans la répartition spectrale de la source.

La figure 1a représente en sortie de cellule de gaz la répartition spectrale du rayonnement qui a rencontré une raie d'absorption du gaz déterminé pour la longueur d'onde $\lambda_0$ ainsi qu'une raie d'absorption d'un interférent pour la longueur d'onde $\lambda_1$.

La figure 1b représente la transmission spectrale du filtre utilisé dans le document EP 0 608 049 lorsque le filtre est accordé sur la longueur d'onde $\lambda_0$ du gaz. Sur cette figure, la répartition spectrale du rayonnement est indiquée en pointillés.

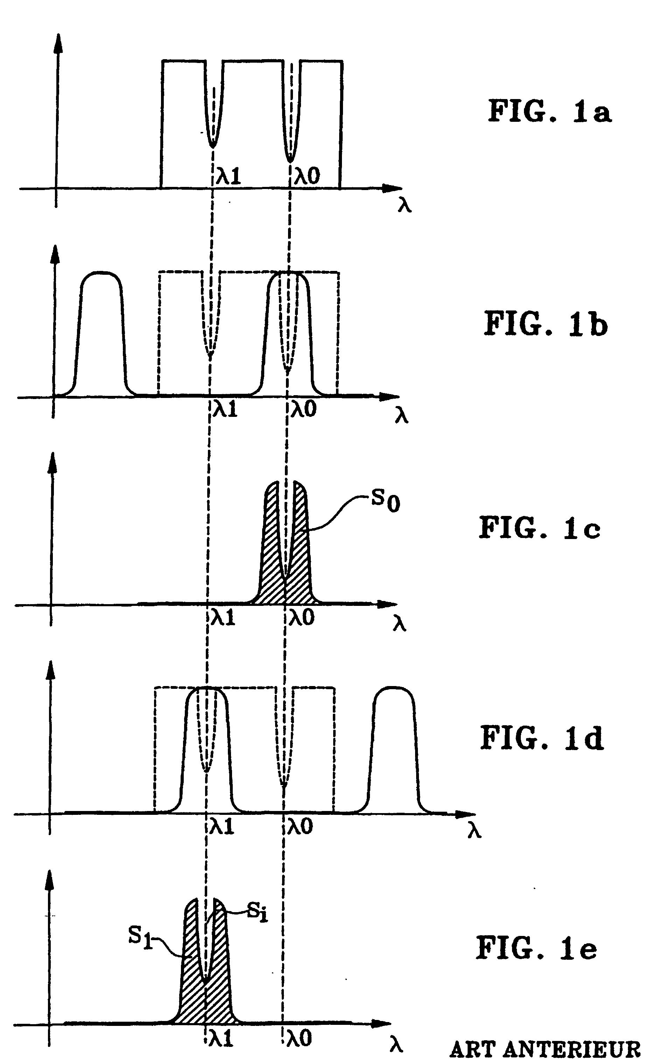

La figure 1c représente l'énergie mesurée (aire hachurée) par le détecteur lorsque le filtre est dans la position indiquée sur la figure 1b.

Afin d'obtenir une valeur de l'énergie mesurée qui serve de référence et qui soit donc indépendante de la longueur d'onde $\lambda_0$ du gaz, il ressort du document de l'art antérieur que par variation de l'épaisseur entre les deux éléments en regard du filtre, on déplace ledit filtre en dehors de la raie d'absorption du gaz.

Or, comme l'illustre la figure 1d, il peut arriver que la nouvelle position du filtre corresponde à une longueur d'onde d'un interférent présent dans le mélange de gaz. Dans ce cas, la valeur de l'énergie mesurée par le détecteur (aire hachurée) et qui doit faire office de référence sera celle représentée sur la figure 1e.

Si l'on appelle $S_0$ et $S_1$ les énergies respectivement mesurées par le détecteur dans les cas représentés par les figures 1c et 1e et U le signal utile pour la détermination de la concentration du gaz, on a :

$$U = S_0 / S_1$$

Généralement, ce rapport s'exprime sous la forme :

$$S_0 / S_1 = (A+Bx) / (C+Dx),$$

où x représente la concentration du gaz.

Pour déterminer x, il suffit de résoudre l'équation visée ci-dessus. On s'aperçoit que la précision sur la détermination de x est directement reliée à la précision que l'on obtient sur la valeur de U et l'on a :

$$\Delta U / U = \Delta S_0/S_0 + \Delta S_1/S_1$$

Or, lorsque la valeur de référence $S_1$ correspond à celle de la figure 1e, le terme $\Delta S_1/S_1$ est très élevé et cela induit donc une mauvaise précision sur le signal utile U et donc sur la détermination de x.

La présente invention vise à remédier à cet inconvénient en proposant un filtre qui permette de réduire fortement l'influence des interférents en vue d'améliorer la précision sur la détermination de la concentration de gaz.

La présente invention a ainsi pour objet un filtre de type Fabry-Pérot pour un rayonnement électromagnétique présentant une densité spectrale modifiée par un gaz, comprenant un corps qui est transparent audit rayonnement électromagnétique au moins dans sa partie traversée par le rayonnement, ladite partie comprenant au moins deux portions qui possèdent deux surfaces en regard sensiblement planes et parallèles entre elles et qui définissent entre elles une cavité d'épaisseur $e_0$ correspondant à une première position dite extrême desdites surfaces, l'une desdites portions, appelée première portion, étant mobile suivant une direction sensiblement perpendiculaire au couple de surfaces en regard, et des moyens pour déplacer lesdites surfaces en regard entre deux positions extrêmes sous l'action d'un champ électromagnétique, caractérisé en ce que le filtre comprend en outre des moyens pour limiter l'adhérence entre ces surfaces pour la seconde position extrême dans laquelle lesdites surfaces sont à une distance l'une de l'autre qui est faible devant la longueur d'onde moyenne du rayonnement qui les traverse.

En amenant en contact les surfaces en regard on déplace la transmission spectrale du filtre en dehors de la répartition spectrale de la source lumineuse qui est à l'origine du rayonnement électromagnétique.

On entend par "contact" le fait d'amener les surfaces en regard à une distance l'une de l'autre faible devant la longueur d'onde moyenne du rayonnement qui les traverse, ce qui permet de limiter les phénomènes d'interférence dûs à ces surfaces. Le terme "contact" sera utilisé dans ce sens dans la suite de l'exposé.

Ce déplacement a pour effet d'augmenter la valeur de transmission du filtre en la rapprochant de la valeur 1 sur toute la largeur spectrale du rayonnement. Ainsi, s'il se trouve un interférent dont la longueur d'onde d'absorption se situe dans la plage de longueurs d'onde de la source lumineuse, son effet se trouve en quelque sorte dilué puisque l'énergie mesurée sera celle du rayonnement dont la densité spectrale a été modifiée par les gaz, atténuée par la valeur de transmission du filtre qui est proche de 1. La valeur de référence ainsi obtenue est plus fiable que dans l'art antérieur précité.

Il est possible d'amener ces surfaces en regard en contact sans craindre de les coller et donc de rendre inutilisable le filtre en limitant l'adhérence entre ces surfaces.

En outre, lorsque les surfaces sont en contact le filtre est dans une position mécanique stable, ce qui le rend insensible aux vibrations mécaniques qui peuvent perturber fortement les mesures.

Chaque portion possède une surface qui est opposée à la surface de ladite portion faisant partie du couple de surfaces en regard.

Afin d'obtenir un meilleur contraste à travers le filtre et donc une meilleure résolution dans la détermination ultérieure de la concentration du gaz, les surfaces opposées des deux portions sont traitées de manière à transmettre le rayonnement électromagnétique pratiquement sans réflexion.

Selon un deuxième mode de réalisation de l'invention, le filtre comprend une troisième portion de corps possédant une surface qui est située en regard de la surface de la première portion qui est opposée à la surface de ladite première portion faisant partie du premier couple de surfaces en regard, les surfaces en regard des première et troisième portions formant un second couple de surfaces en regard sensiblement planes parallèles entre elles.

Dans ce mode de réalisation, le filtre comprend également des moyens pour déplacer la surface opposée de la première portion et la surface en regard de la troisième portion entre deux positions extrêmes sous l'action d'un champ électromagnétique ainsi que des moyens pour limiter l'adhérence entre ces surfaces pour l'une au moins de ces positions.

Selon un troisième mode de réalisation de l'invention, le filtre comprend une troisième portion de corps possédant une surface située en regard de la surface de la deuxième portion qui est opposée à la surface de ladite deuxième portion faisant partie du premier couple de surfaces en regard, les surfaces en regard des deuxième et troisième portions formant un second couple de surfaces en regard sensiblement planes, parallèles entre elles, la troisième portion étant mobile suivant une direction perpendiculaire aux surfaces en regard.

Dans ce mode de réalisation, le filtre comprend des moyens pour déplacer la surface de la troisième portion et la surface opposée en regard de la deuxième portion entre deux positions extrêmes sous l'action d'un champ électromagnétique, ainsi que des moyens pour limiter l'adhérence entre ces surfaces pour l'une au moins de ces positions.

Lorsque ces moyens sont activés ainsi que les moyens pour amener en contact les surfaces en regard des première et deuxième portions, les première et troisième portions mobiles se trouvent calées sur la deuxième portion du corps et permettent ainsi d'obtenir une position de référence du filtre stable, insensible aux vibrations mécaniques.

Selon d'autres caractéristiques de l'invention :

- les moyens pour déplacer les surfaces comprennent au moins une source de tension appliquée auxdites surfaces en regard,
- les surfaces sont pourvues d'électrodes qui sont reliées aux bornes de la source de tension,
- le matériau constitutif des portions du corps est électriquement conducteur,
- la somme des distances séparant chaque couple de surfaces en regard est sensiblement égale à $\lambda_0/2$ où $\lambda_0$ est la longueur d'onde du gaz,
- les moyens pour limiter l'adhérence comprennent des butées mécaniques solidaires de l'une et/ou de l'autre des surfaces en regard,
- les moyens pour limiter l'adhérence sont formés par des revêtements adaptés déposés sur l'une et/ou l'autre des surfaces en regard,
- les moyens pour limiter l'adhérence sont formés par une rugosité prédéterminée conférée à l'une et/ou à l'autre des surfaces en regard,
- les surfaces sont revêtues d'une couche antireflet,
- le rayonnement électromagnétique est de préférence optique.

L'invention a également pour objet un dispositif de détermination de la concentration d'un gaz, comprenant :

- une source d'un rayonnement électromagnétique qui présente une absorption sélective vis à vis de longueurs d'ondes de gaz,
- une cellule contenant ledit gaz et qui est traversée par le rayonnement,
- un filtre recevant le rayonnement dont la densité spectrale a été modifiée par le gaz,
- un détecteur du rayonnement filtré mesurant l'énergie dudit rayonnement,
- et des moyens pour déterminer la concentration du gaz à partir de deux mesures de l'énergie dont l'une sert de valeur de référence,

caractérisé en ce que le filtre possède les caractéristiques précédemment décrites.

L'invention concerne également une méthode d'utilisation d'un filtre comprenant les caractéristiques énoncées dans la revendication 1, selon laquelle on déplace au moins l'une des surfaces en regard jusqu'à une position extrême dans laquelle lesdites surfaces en regard sont à une distance l'une de l'autre qui est faible devant la longueur d'onde moyenne du rayonnement qui les traverse et l'on écarte ensuite ladite surface de cette position extrême.

D'autres caractéristiques et avantages apparaîtront au cours de la description qui va suivre, donnée à titre d'exemple non limitatif et faire en référence aux dessins annexés sur lesquels :

- la figure 1a représente la répartition spectrale du rayonnement issu de la cellule de gaz,
- la figure 1b représente la transmission spectrale du filtre du document EP 0 608 049 pour une position accordée sur la longueur d'onde $\lambda_0$ du gaz,
- la figure 1c représente l'énergie mesurée par le détecteur lorsque le filtre est dans la position de la figure 1b,
- la figure 1d représente la transmission spectrale du filtre du document EP 0 608 049 pour une position décalée par rapport à la longueur d'onde $\lambda_0$ du gaz mais accordée sur la longueur d'onde $\lambda_1$ d'une raie d'absorption d'un gaz parasite (interférent),
- la figure 1e représente l'énergie mesurée par le détecteur lorsque le filtre est dans la position de la figure 1d,
- la figure 2 est une vue d'un dispositif de détermination d'une concentration de gaz incluant un filtre selon l'invention,
- la figure 3a représente la transmission spectrale du filtre selon l'invention pour une position accordée sur la longueur d'onde $\lambda_0$ du gaz,
- la figure 3b représente l'énergie mesurée par le détecteur lorsque le filtre selon l'invention est dans la position de la figure 3a,
- la figure 3c représente la transmission spectrale du filtre selon l'invention pour une position décalée par rapport à la longueur d'onde $\lambda_0$ du gaz,
- la figure 3d représente l'énergie mesurée par le détecteur lorsque le filtre est dans la position de la figure 3c,
- la figure 4 est une vue en coupe d'un filtre selon un premier mode de réalisation de l'invention,
- les figures 4a et 4c sont des vues partielles du filtre de la figure 4 en cours de fonctionnement,
- la figure 4b est une vue partielle d'une variante de réalisation du filtre représenté aux figures 4 et 4a en cours de fonctionnement,
- la figure 4d est une vue en coupe d'un filtre selon une autre variante de réalisation du mode de réalisation représenté à la figure 4,
- la figure 5 est une vue en coupe d'un filtre selon un deuxième mode de réalisation,
- la figure 5a est une vue partielle du filtre de la figure 5 en cours de fonctionnement,
- les figures 5b et 5c sont des vues partielles d'une variante de réalisation du filtre de la figure 5 en cours de fonctionnement,
- la figure 5d est une vue en coupe du filtre de la figure 5 selon une autre variante de réalisation,
- la figure 6 est une vue d'un filtre selon un troisième mode de réalisation de l'invention,
- la figure 6a est une vue partielle du filtre de la figure 6 en cours de fonctionnement,
- la figure 6b est une vue d'une variante de réalisation du filtre de la figure 6 en cours de fonctionnement.

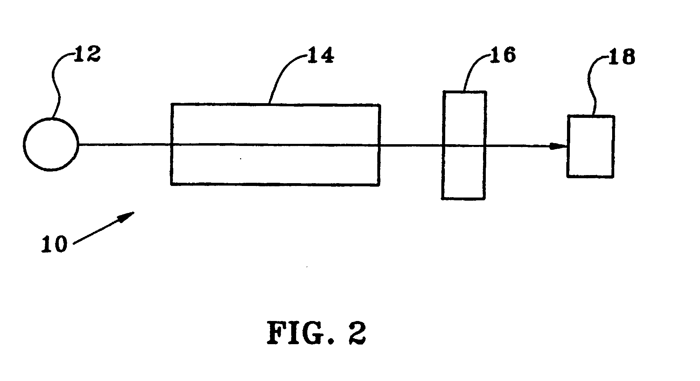

Comme représenté sur la figure 2 par la référence générale notée 10, un dispositif de détermination de la concentration d'un gaz tel que le méthane comprend une source de rayonnement électromagnétique 12 qui est par exemple une source optique.

Cette source 12 est par exemple une lampe à infrarouge émettant un rayonnement de longueur d'onde $\lambda_0 = 3,35\mu m$. Cette longueur correspond à une des raies d'absorption du gaz choisi. La source présente une répartition spectrale dans la plage de longueurs d'onde [2; 4$\mu m$].

Le dispositif 10 comprend également une cellule 14 contenant un gaz de concentration donnée.

Le rayonnement représenté par la flèche horizontale sur la figure 1, traverse la cellule 14 et absorbe sélectivement le gaz.

En sortie de la cellule 14, le rayonnement présente une densité spectrale modifiée par la présence de pics d'absorption dûs à sa rencontre avec le gaz.

Un filtre 16 du type passe-bande reçoit ce rayonnement et le transmet à un détecteur 18 qui en mesure l'énergie et qui peut par exemple être un bolomètre.

L'énergie mesurée par le détecteur a une expression de la forme :

$$S(\lambda) = \int_{\lambda a}^{\lambda b} I_0(\lambda) T_g(\lambda) T_f(\lambda) d\lambda$$

où $[\lambda a, \lambda b]$ représente la largeur spectrale de la source 12, $I_0(\lambda)$ est l'énergie du rayonnement émis à la source 12, $T_g(\lambda)$ est le coefficient de transmission dû au gaz et $T_f(\lambda)$ est le coefficient de transmission du filtre.

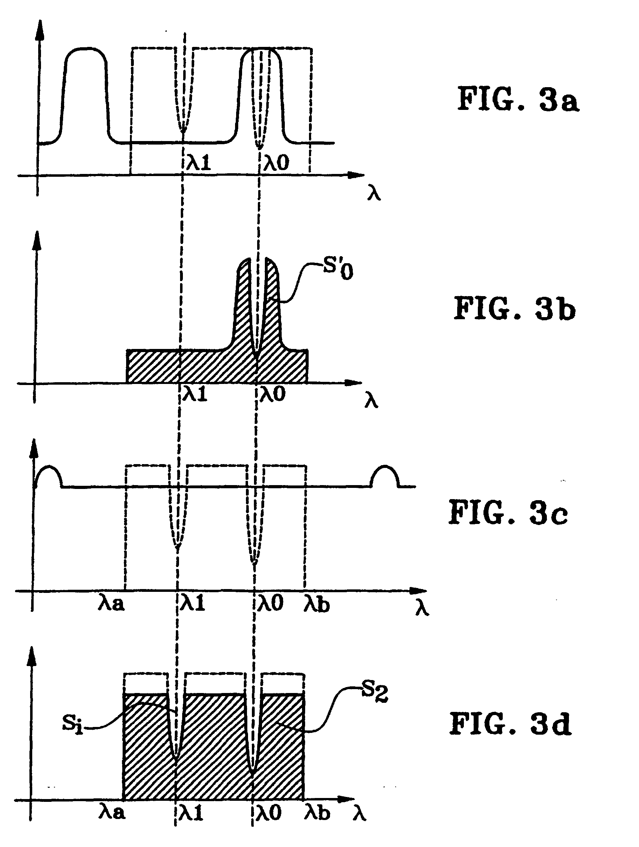

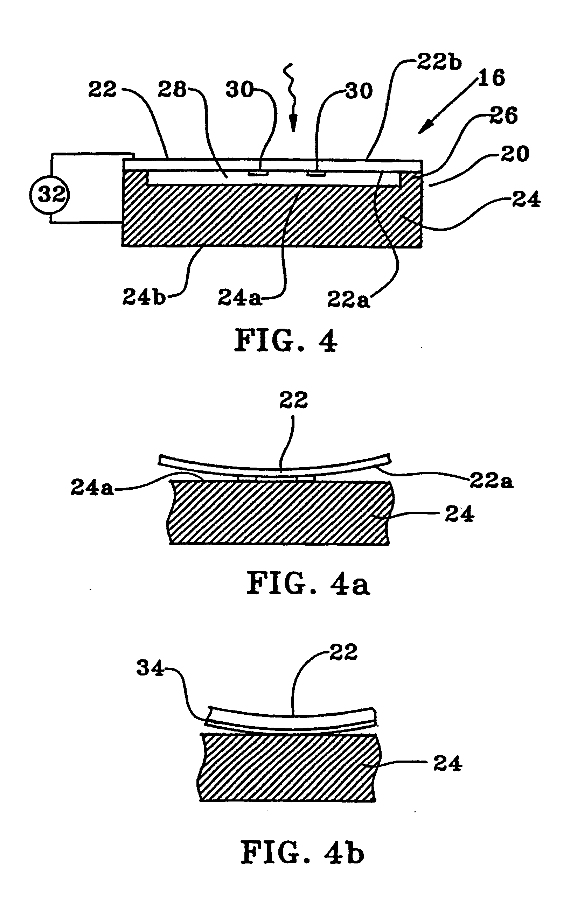

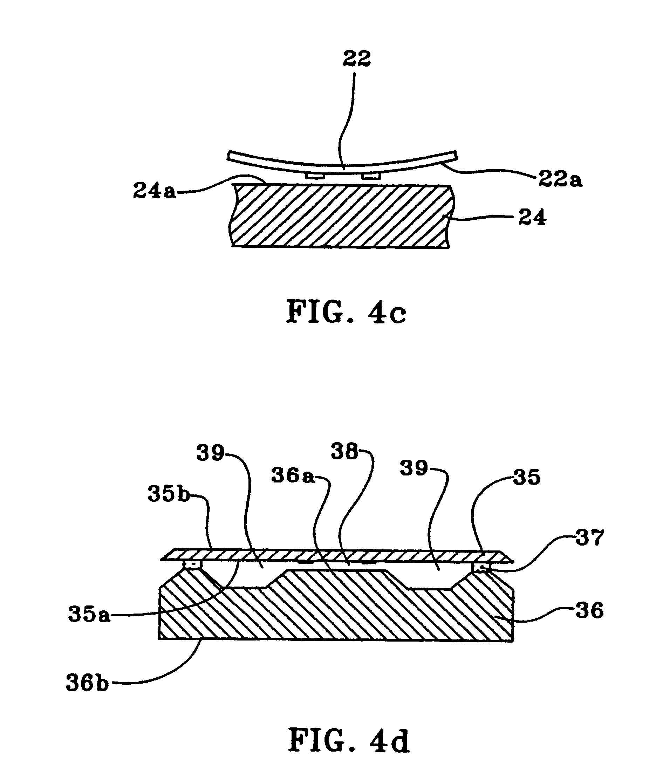

Le filtre 16 selon l'invention, du type interféromètre de Fabry-Pérot, représenté à la figure 4, est utilisé pour faire une première mesure $S'_0$ représentative de la concentration du gaz (Fig.3b). Dans cette position, le filtre est parfaitement accordé sur la longueur d'onde $\lambda_0$ du gaz tel que représenté sur la figure 3a. Le filtre est ensuite utilisé dans une seconde position pour faire une seconde mesure $S_2$ qui sert de référence. Dans cette position, le filtre est décalé par rapport à la longueur d'onde du gaz en dehors du spectre de la source 12 et le filtre se trouve dans une position pour laquelle la transmission spectrale est représentée en trait plein sur la figure 3c.

Sur cette figure, les pointillés représentent la répartition spectrale du rayonnement optique qui provient de la cellule de gaz et qui a donc rencontré deux pics d'absorption, l'un correspondant à la longueur d'onde $\lambda_0$ du gaz dont on cherche à déterminer la concentration et l'autre correspondant à la longueur d'onde $\lambda_1$ d'un interférent présent dans le gaz.

Il apparaît donc que la valeur de la transmission spectrale du filtre entre les franges a été considérablement augmentée grâce à l'invention par comparaison avec le filtre décrit dans le document EP 0 608 049.

Ainsi, lorsque l'on représente à la figure 3d l'énergie mesurée $S_2$ (aire hachurée) par le détecteur 18 pour cette position "décalée" du filtre qui sert de référence, on s'aperçoit que le rapport $S_i/S_2$ est beaucoup plus faible que le rapport $S_i/S_1$ pour le cas de la figure 1e (art antérieur), où $S_i$ représente l'énergie due à l'interférent dont une raie d'absorption a la longueur d'onde $\lambda_1$. Ceci signifie que dans le cas de la figure 3d, l'influence de l'interférent est considérablement réduite et, la concentration de gaz x qui s'obtient en résolvant l'équation :

$$S'_0/S_2 = (A+Bx) / (C+Dx)$$

est donc déterminée avec une plus grande précision que dans l'art antérieur.

Comme représenté à la figure 4, le filtre 16 de la figure 2 est constitué par un corps 20 qui comprend une première portion formée par une membrane 22 de forme sensiblement circulaire. Le corps comprend également une deuxième portion 24 formant support de forme générale sensiblement cylindrique.

La membrane 22 est fixée au support 24 par l'intermédiaire d'un rebord périphérique 26 dudit support 24.

La membrane 22 et le support 24 possèdent deux surfaces, respectivement 22a et 24a en regard l'une de l'autre et définissant entre elles une cavité 28 d'épaisseur $e_0$.

Ces surfaces sont sensiblement planes et parallèles entre elles.

Par exemple, la cavité 28 contient un milieu qui ne présente pas d'interférence spectrale avec le gaz dont on cherche à déterminer la concentration.

Le milieu est par exemple de l'Argon ou un autre gaz neutre, voire même un liquide.

La cavité peut également être mise sous vide.

La membrane 22 est mobile par rapport au support 24 dans une direction qui est perpendiculaire au couple de surfaces 22a, 24a en regard.

Le rayonnement optique qui présente une répartition spectrale telle qu'indiquée sur la figure 3a est représentée par une flèche verticale dirigée vers la membrane 22. Le corps 20 est transparent au rayonnement optique choisi et est par exemple réalisé en silicium.

Un tel filtre peut par exemple être obtenu de la manière indiquée dans le document EP 0 608 049 pour ce qui concerne les principales étapes de fabrication.

La surface 22a de la membrane est munie de butées mécaniques 30 qui sont par exemple obtenues comme expliqué dans l'article "Low drift integrated capacitive accelerometer with PLL servo technique" de Y. Matsumoto et M. Esashi extrait de "The 7th International Conference on Solid-State Sensors and Actuators".

Ces butées doivent avoir une hauteur faible devant la longueur d'onde $\lambda_0$ du gaz lorsqu'elle se trouvent dans la zone active du filtre mais il est également possible de les placer en dehors de cette zone. Par exemple,les butées ont une hauteur de $0,7.10^{-3}$mm et sont par exemple réalisées dans un matériau tel que SiON.

Pour réaliser des butées dans un matériau tel que SiON ou $SiO_2$ sur la surface 22a par exemple en silicium, on peut par exemple procéder de la façon suivante.

On effectue sur la surface 22a, un dépôt d'une couche de SiON ou $SiO_2$, d'épaisseur par exemple égale à $2\mu m$, par voie chimique de type CVD (Chemical Vapor Deposition) puis on dépose une couche de résine photosensible (PPMA) ainsi qu'un masque optique de photogravure, permettant ainsi, après exposition sous une lumière ultraviolette et développement chimique classique, de structurer la résine pour ne laisser la résine qu'aux endroits où l'on veut former les butées.

En protégeant ces zones et en effectuant une gravure chimique au moyen d'une solution de HF dilué dans un rapport 7:1 avec de l'eau on enlève le matériau SiON ou $SiO_2$ en dehors des endroits où l'on souhaite avoir les butées.

Un nettoyage classique permet d'enlever la résine restant au droit des futures butées.

Une autre couche de résine photosensible (PPMA) est déposée sur la surface ainsi qu'un masque optique de photogravure, permettant ainsi, après exposition et développement, de structurer la résine au droit des butées pour ne laisser la résine qu'en dehors de ces endroits.

En protégeant ces zones et en effectuant une gravure chimique au moyen d'une solution de HF identique à la précédente, on enlève l'épaisseur de matériau SiON ou $SiO_2$ suffisante au droit des butées pour obtenir une hauteur finale de $0,7.10^{-3}$ mm.

La résine restante est ensuite enlevée par un nettoyage classique.

Les surfaces 22a et 24a sont mises en contact par le fait que la membrane 22 se déplace sous l'action d'un champ électromagnétique. Dans l'exemple illustré sur la figure 4, il s'agit d'un champ électrostatistique créé par une différence de potentiel appliquée aux surfaces 22a et 24a au moyen d'une source de tension 32 telle qu'une pile.

Le silicium étant électriquement conducteur, il n'est pas nécessaire de prévoir des électrodes transparentes au rayonnement sur chacune des surfaces. Toutefois, il faut isoler électriquement la membrane 22 et le support 24 mais cela n'est pas représenté sur les figures.

Sous l'action d'une tension, la surface 22a se rapproche de la surface 24a par effet capacitif et vient en contact avec celle-ci par l'intermédiaire des butées 30 comme l'illustre la figure 4a. Dans cette position de la membrane 22, le filtre est mécaniquement stable et peut donc être insensible aux vibrations mécaniques en cours de fonctionnement.

En outre, comme il a été dit précédemment, dans cette position le filtre est translaté par rapport à la longueur d'onde $\lambda_0$ du gaz et l'on obtient le spectre en transmission du filtre représenté en trait plein sur la figure 3c.

Le filtre ainsi positionné présente une grande insensibilité aux interférents ce qui permet d'obtenir une énergie de référence $S_2$ (Fig.3d) plus fiable que dans l'art antérieur et donc une meilleure précision sur la concentration du gaz déterminée.

En raison de la présence des butées 30, les surfaces 22a et 24a ne peuvent adhérer entre elles sur la plan moléculaire et ainsi provoquer un "collage" de ces surfaces par création de liaisons chimiques entre les différentes molécules desdites surfaces.

Il convient de noter que dans le filtre selon l'invention on ne recherche pas à avoir une transmission spectrale aussi faible que possible en dehors des franges comme en témoigne la figure 3a par rapport à la figure 1b de l'art antérieur.

En effet, dans les interféromètres de Fabry-Pérot il est même d'ailleurs connu de rechercher des franges aussi fines que possible et une valeur de transmission aussi faible que possible entre lesdites franges afin d'éviter les longueurs d'onde d'interférent en dehors de ces franges.

Lorsque la différence de potentiel est supprimée, la membrane 22 peut reprendre sa position initiale.

Il est également possible de limiter l'adhérence entre les surfaces 22a et 24a en conférant à l'une ou à l'autre desdites surfaces, voire aux deux surfaces, une rugosité prédéterminée pour laquelle la hauteur du relief ainsi créé doit être inférieure à la longueur d'onde $\lambda_0$.

Il est aussi envisageable de modifier microscopiquement la (ou les) surface(s) pour empêcher la création de liaisons moléculaires lors du contact des surfaces.

Par exemple, ceci peut être réalisé en effectuant une implantation ionique d'Azote sur une épaisseur de quelques dizaines de nanomètres avec une dose d'ions de l'ordre de $10^{15}$ ions/$cm^2$.

On peut encore revêtir les surfaces amenées à être en contact avec des couches de matériaux adaptés en vue de diminuer l'adhérence comme représenté sur la variante de la figure 4b. Par exemple, une couche d'épaisseur comprise entre 500 et 1000 Å d'un matériau tel que de l'or convient pour cette application.

Sur la figure 4b, les dimensions ont été volontairement exagérées pour discerner la couche 34 du matériau. Une telle couche peut par exemple être déposée par une technique connue comme la pulvérisation cathodique ou par dépôt électrolytique.

On peut aussi traiter les surfaces par un dopage élevé d'Arsenic.

Il est également envisageable d'effectuer un dépôt de n-alkyltrichlorosilane sur les surfaces amenées à être en contact en trempant celles-ci dans une solution dans laquelle les molécules de n-alkyltrichlorosilane sont dissoutes dans une solution d'hexadécane dans une concentration variant, par exemple, de $10^{-3}$ à $10^{-2}$ mol/l. Un tel produit est par exemple commercialisé par la société ALDRICH.

Lorsque la membrane est dans sa position initiale (épaisseur $e_0$), on effectue une mesure de l'énergie $S'_0$ du rayonnement transmis par le

filtre. L'épaisseur $e_0$ est calculée pour que la frange du filtre soit dans la position correspondant à la transmission spectrale représentée à la figure 3a. Cette épaisseur est donc choisie égale à $\lambda_0/2$.

La figure 4c représente une possibilité d'utilisation du filtre selon l'invention dans laquelle la tension est ajustée entre la membrane 22 et le support 24 pour obtenir une épaisseur réduite par rapport à $e_0$.

Ainsi, on peut venir se positionner précisément sur une raie d'absorption d'un autre gaz ce qui permet grâce à la valeur fiable de l'énergie de référence $S_2$ de déterminer la concentration de cet autre gaz présent dans le mélange avec une précision améliorée par rapport à l'art antérieur.

Pour obtenir une meilleure résolution sur la concentration du gaz que ce qui est décrit en référence aux figures 4, 4a, 4b et 4c, on traite les surfaces 22b et 24b, respectivement opposées aux surfaces 22a et 24a, de manière à transmettre le rayonnement optique pratiquement sans réflexion.

Pour ce faire, il est connu de déposer sur chacune des surfaces 22b et 24b une couche antireflet par exemple en $SiO_2$ ou en $Si_3N4$. Il est également possible de doper le silicium constituant les surfaces 22b de la membrane 22 et 24b du support 24 pour adapter l'indice de réfraction du matériau à celui de l'air environnant.

Une couche anti-reflet est réalisée de façon connue par le dépôt d'une épaisseur optique égale à $\lambda_0/4$ d'un matériau d'indice égal à la racine carrée de l'indice du silicium.

Il convient de remarquer qu'au lieu de créer un champ électrostatique pour déplacer la membrane, on peut créer un champ magnétique en plaçant une bobine sur le support 24 et, à proximité, un aimant sur la surface 22a de la membrane.

La membrane peut également être un élément piézoélectrique.

Dans ce cas le filtre peut par exemple être fabriqué selon l'enseignement de l'article "Silicium pressure sensors using a wafer-bonded sealed cavity process" de Lalitha Parameswaran, Andrew Mirza, Wendy K.Chan et Martin A.Schmidt extrait de "The 8th International Conference on Solid-State Sensors and Actuators, and Eurosensors IX, Stockholm, Sweden, June 25-29, 1995, p 582".

Il est indispensable, bien que cela ne soit pas représenté sur les figures, que la membrane et le support soient isolés électriquement par exemple par des zones d'oxyde isolant.

La figure 4d représente une variante de réalisation du filtre de la figure 4. Un tel filtre est décrit par sa structure dans le document FR 2 701 564 où la structure est celle d'un capteur capacitif de pression.

Le filtre représenté à la figure 4d comprend un corps constitué de deux portions en regard, l'une mobile formant membrane 35 et l'autre fixe formant support 36 isolées électriquement l'une de l'autre par un cadre de liaison périphérique 37. Les portions mobile 35 et fixe 36 définissent par leurs surfaces respectives en regard 35a et 36a une cavité centrale 38 d'épaisseur sensiblement constante communiquant avec une cavité périphérique 39.

Les cavités sont par exemple remplies d'un gaz n'interférant pas spectralement avec le gaz à analyser, par exemple un gaz neutre tel que l'Argon.

La surface 35a est munie de butées identiques à celles décrites en référence à la figure 4. En outre, les surfaces extérieures 35b et 36b sont munies par exemple de couches anti-reflets en $SiO_2$.

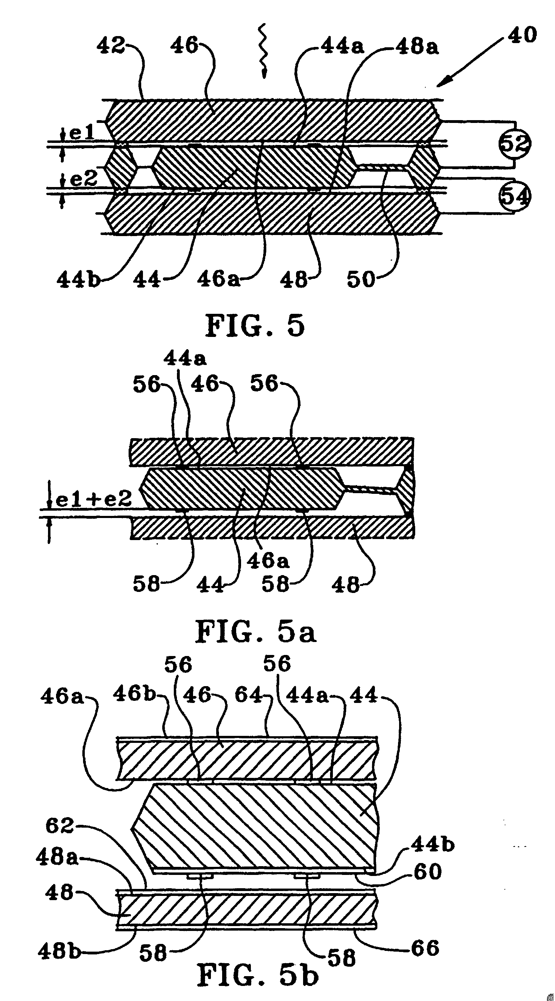

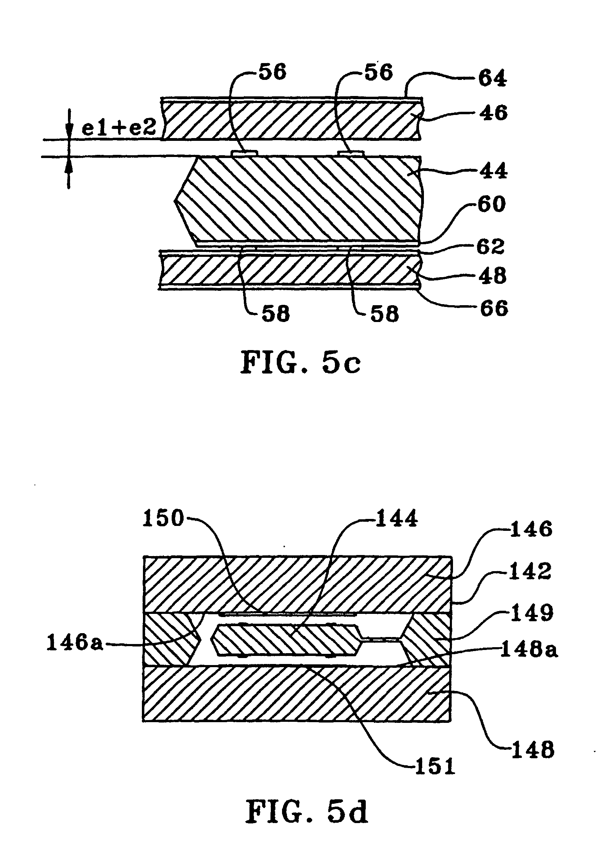

Un second mode de réalisation de l'invention est représenté aux figures 5 et 5a.

Le filtre 40 de la figure 5 est par exemple fabriqué selon l'enseignement du document FR 2 698 447.

Dans ce mode de réalisation, le filtre 40 comprend un corps 42 en silicium constitué d'une première portion mobile 44 placée entre deux portions fixes 46 et 48.

Chaque portion fixe a la forme d'une membrane isolée électriquement de la portion mobile.

La portion mobile 44 est reliée au corps 42 par un bras 50.

Le filtre ainsi constitué présente deux couples de surfaces en regard sensiblement planes et parallèles entre elles, un premier couple de surfaces 44a, 46a distantes d'une épaisseur $e_1$ et un second couple de surfaces 44b, 48a distantes d'une épaisseur $e_2$.

Chaque couple de surfaces en regard forme un interféromètre de type Fabry-Pérot.

Par exemple, ces surfaces sont séparées par un milieu n'interférant pas spectralement avec le gaz à analyser, comme par exemple l'Argon ou un autre gaz neutre, voire par le vide.

La première portion 44 peut se déplacer dans une direction perpendiculaire aux surfaces en regard 44a, 46a, 44b, 48a qui correspond à la direction suivant laquelle se propage le rayonnement optique symbolisé par la flèche verticale descendante.

Deux sources de tensions 52 et 54 sont prévues pour provoquer le déplacement de la première portion 44 respectivement vers la membrane 46 et vers la membrane 48, avec par exemple des tensions de l'ordre de quelques Volts, cette valeur pouvant varier en fonction de la raideur de la première portion.

La première portion 44 est munie sur ses surfaces opposées 44a et 44b de butées mécaniques respectives 56 et 58 qui permettent de limiter l'adhérence entre les couples de surfaces 44a, 46a et 44b, 48a. Ces butées sont obtenues de la même manière qu'indiqué précédemment.

Comme représenté sur la figure 5a, les surfaces 44a et 46a entrent en contact par l'intermédiaire des butées 56, définissant ainsi une position mécanique stable, la position de référence étant donnée par la première portion disposée au milieu des deux autres portions. Selon une variante de réalisation du filtre représenté aux figures 5 et 5a les surfaces en regard 44b, 48a sont traitées de manière à transmettre le rayonnement optique pratiquement sans aucune réflexion optique.

Des couches antireflets 60, 62 en $SiO_2$ sont par exemple respectivement déposées sur les surfaces 44b et 48a (Fig.5b). D'autres traitements tels que ceux mentionnés précédemment en référence aux figures 4 et 4a-c sont également envisageables.

De mêmes, les surfaces 46b et 48b respectivement opposées des surfaces 46a et 48a sont munies de couches antireflets 64, 66.

Lorsque la première portion 44 occupe la position de la figure 5b, le filtre se trouve dans une position stable dite de référence (Fig.3c) et en raison des couches antireflets 60, 62, 64, 66 le filtre présente une transmission spectrale essentiellement constante.

Lorsque la première portion 44 occupe la position de la figure 5c, le filtre se trouve dans une position de mesure qui est stable mécaniquement et non plus dans une position de référence.

En mesurant, dans chacune de ces positions l'énergie de rayonnement reçue par le détecteur 18, on obtient un meilleur contraste et donc une meilleure résolution sur la concentration de gaz que pour le filtre des figures 5 et 5a.

La figure 5d décrit une variante de réalisation du filtre représenté aux figures 5 et 5a.

Les références portent un numéro précédé du chiffre 1 et les éléments déjà décrits en référence à la figure 5 ne seront pas repris dans ce qui suit. Le filtre comprend un corps 142 constitué d'une portion mobile 144 formant électrode mobile en silicium et de deux portions fixes 146 et 148 en verre encadrant l'électrode mobile.

Les deux portions fixes 146 et 148 sont séparées l'une de l'autre par une pièce 149 en silicium formant entretoise et servant de support à l'électrode mobile 144.

Le procédé de fabrication d'une telle structure est décrit dans l'article "Highly reliable silicon micro-machined physical sensors in mass production" de Takao Sasayama, Seikoo Suzuki, Shigeki Tsuchitani, Akira Koide, Masayoshi Suzuki, Terumi Nakazawa et Norio Ichikawa extrait de "The 8th International Conference on Solid-State Sensors and Actuators and Eurosensors IX, Stockholm, Sweden, June 25-29, 1995, p 688".

L'électrode mobile 144 est munie de butées.

Chaque portion fixe 146, 148 est respectivement munie sur la face 146a, 148a d'une électrode fixe semi-transparente 150, 151 placée en regard de la face correspondante de l'électrode mobile 144.

Ces électrodes fixes 150, 151 sont reliées chacune à une source de tension non représentée.

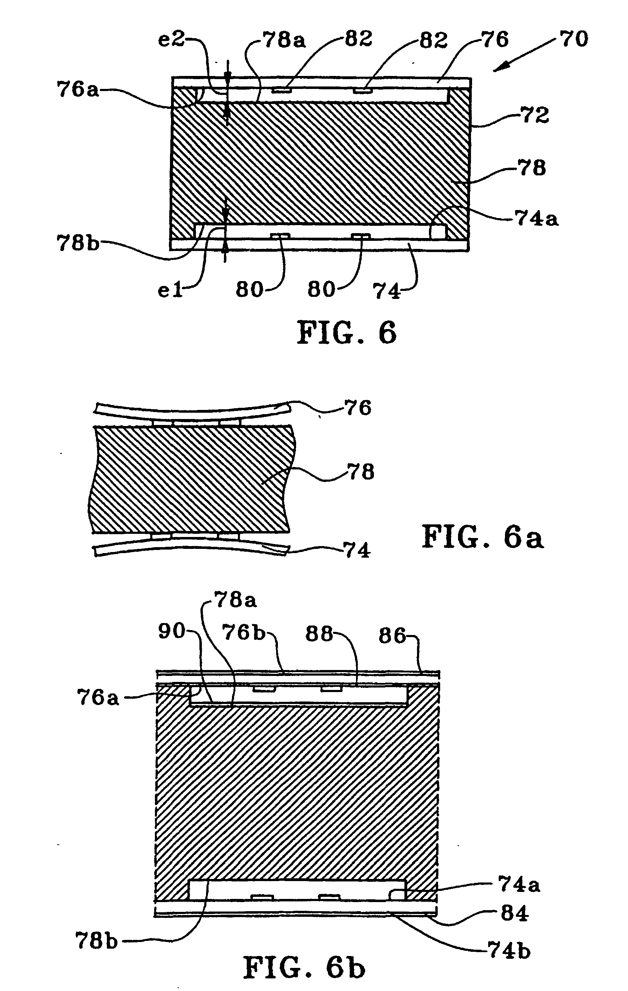

Selon un troisième mode de réalisation de l'invention représenté aux figures 6 et 6a, le filtre 70 comprend un corps 72 constitué de deux portions mobiles 74, 76 qui sont des membranes montées de part et d'autre d'une portion centrale 78 formant un support fixe.

Ce mode de réalisation s'obtient en fait en effectuant une symétrie du filtre de la figure 4 par rapport à sa ligne de base horizontale.

Un processus de fabrication identique à celui cité en référence à la figure 4 et mis en oeuvre sur les deux faces d'une plaquette de silicium permet d'obtenir le filtre optique de la figure 6.

Le processus de fabrication décrit dans le document FR 2 701 564 et mis en oeuvre sur les deux faces d'une plaquette de silicium permettrait d'obtenir le filtre représenté à la figure 4 et son symétrique par rapport à la ligne de base horizontale du support 36. Un tel filtre correspond également au troisième mode de réalisation de l'invention.

Ce filtre comprend deux couples de surfaces en regard 76a, 78a et 74a, 78b sensiblement planes et parallèles entre elles.

Les surfaces 74a et 78b (resp. 76a et 78a) définissent entre elles une cavité remplie d'un gaz tel que l'Argon et sont séparées d'une de l'autre d'une distance $e_1$ (resp. $e_2$).

Des butées 80 (resp. 82) sont solidaires de la surface 74a (resp. 76a) de la membrane 74 (resp. 76) afin de limiter l'adhérence des surfaces lorsque celles-ci seront en contact par l'intermédiaire de ces butées.

Ces butées peuvent également être solidaires des faces de la portion centrale 78.

Dans cette position des membranes, les épaisseurs $e_1$ et $e_2$ sont égales à $\lambda_0/4$ où $\lambda_0$ est la longueur d'onde d'absorption maximale du gaz (Fig.3a).

En effet, bien que les membranes soient libres de tout mouvement, lorsque le filtre est parfaitement symétrique, des vibrations mécaniques imposées au filtre vont faire subir aux membranes le même déplacement et ainsi la mesure de l'énergie du rayonnement transmis par le filtre dans cette position sera très peu influencé par ces vibrations.

Il convient de remarquer que la position de la figure 6 est une position stable mécaniquement quelles que soient les épaisseurs $e_1$ et $e_2$.

En appliquant simultanément une forte tension à chaque couple de surfaces en regard (chaque couple de surfaces est isolé électriquement l'un de l'autre) on amène les surfaces 74a et 76a des membranes 74, 76 respectivement en contact avec les surfaces en regard 78b et 78a du support 78 par l'intermédiaire des butées 80 et 82 (Fig.6a).

Les sources de tension analogues à celles représentées sur la figure 5 ne sont pas représentées sur les figures 6, 6a et 6b. La figure 6a illustre cette position de référence parfaitement stable du filtre.

La figure 6b illustre une variante de réalisation dans laquelle des couches antireflets 84, 86, 88 et 90 ont été déposées respectivement sur les surfaces 74b, 76b, 76a et 78a afin de ne laisser actif qu'un seul interféromètre Fabry-Pérot dans le filtre : celui constitué par les surfaces en regard 74a et 78b.

Il faut remarquer que l'épaisseur entre les surfaces en regard 74a et 78b est égale à $\lambda_0/2$.

Cette variante permet d'obtenir le même contraste qu'avec le filtre des figures 6 et 6a et ainsi d'obtenir une même résolution lors de la détermination de la concentration de gaz.

## Revendications

1. Filtre (16;40) de type Fabry-Pérot pour un rayonnement électromagnétique présentant une densité spectrale modifiée par un gaz, comprenant un corps (20;42) qui est transparent audit rayonnement électromagnétique au moins dans sa partie traversée par le rayonnement, ladite partie comprenant au moins deux portions qui possèdent deux surfaces (22a,24a;44a,46a) en regard sensiblement planes et parallèles entre elles et qui définissent entre elles une cavité (28) d'épaisseur $e_0$ correspondant à une première position dite extrême desdites surfaces, l'une desdites portions, appelée première portion (22;44), étant mobile suivant une direction sensiblement perpendiculaire au couple de surfaces (22a,24a;44a,46a) en regard et des moyens (32,52-54) pour déplacer lesdites surfaces en regard (22a,24a) entre deux positions extrêmes sous l'action d'un champ électromagnétique, **caractérisé en ce que** le filtre comprend en outre des moyens (30,56) pour limiter l'adhérence entre ces surfaces pour la seconde position extrême dans laquelle lesdites surfaces sont à une distance l'une de l'autre qui est faible devant la longueur d'onde moyenne du rayonnement qui les traverse.

2. Filtre selon la revendication 1, dans lequel chaque portion (22,24) possède une surface (22b,24b) qui est opposée à la surface (22a,24a) de ladite portion faisant partie du couple de surfaces en regard et lesdites surfaces opposées (22b,24b) des deux portions étant traitées de manière à transmettre le rayonnement électromagnétique pratiquement sans réflexion.

3. Filtre selon la revendication 1 ou 2, comprenant une troisième portion (48) de corps possédant une surface (48) qui est située en regard de la surface (44b) de la première portion qui est opposée à la surface (44a) de ladite première portion faisant partie du premier couple de surfaces en regard (44a,46a), les surfaces en regard (44b,48a) des première et troisième portions formant un second couple de surfaces en regard sensiblement planes, parallèles entre elles.

4. Filtre selon la revendication 3, comprenant des moyens (54) pour déplacer la surface opposée (44b) de la première portion (44) et la surface en regard (48a) de la troisième portion (48) entre deux positions extrêmes sous l'action d'un champ électromagnétique, et des moyens (58) pour limiter l'adhérence entre ces surfaces pour l'une au moins de ces positions.

5. Filtre selon les revendications 3 et 4, dans lequel les surfaces en regard (44b,48a) des première et troisième portions sont traitées de manière à transmettre le rayonnement électromagnétique pratiquement sans réflexion.

6. Filtre selon les revendications 3 à 5, dans lequel les deuxième (46) et troisième (48) portions possèdent chacune respectivement une surface (46b,48b) qui est opposée à la surface (46a,48a) de ladite portion correspondante qui fait partie de l'un des couples de surfaces en regard, et lesdites surfaces opposées (46b,48b) des deuxième et troisième portions étant traitées de manière à transmettre le rayonnement électromagnétique pratiquement sans réflexion.

7. Filtre selon la revendication 1 ou 2, comprenant une troisième portion (76) de corps possédant une surface (76a) située en regard de la surface (78a) de la deuxième portion (78) qui est opposée à la surface (78b) de ladite deuxième portion faisant partie du premier couple de surfaces en regard (74a,78b), les surfaces en regard (76a,78a) des deuxième et troisième portions formant un second couple de surfaces en regard sensiblement planes, parallèles entre elles, la troisième portion (76) étant mobile suivant une direction perpendiculaire aux surfaces en regard.

8. Filtre selon la revendication 7, comprenant des moyens pour déplacer la surface de la troisième portion et la surface opposée en regard de la deuxième portion entre deux positions extrêmes sous l'action d'un champ électromagnétique, et des moyens (82) pour limiter l'adhérence entre ces surfaces pour l'une au moins de ces positions.

9. Filtre selon la revendication 7 ou 8, dans lequel les surfaces en regard (76a,78a) des deuxième et troisième portions sont traitées de manière à transmettre le rayonnement électromagnétique pratiquement sans réflexion.

10. Filtre selon l'une des revendications 7 à 9, dans lequel les première (74) et troisième (76) portions possèdent chacune respectivement une surface (74b,76b) qui est opposée à la surface de la portion correspondante qui fait partie d'un couple de surfaces en regard, et lesdites surfaces opposées (74b, 76b) des première et troisième portions étant traitées de manière à transmettre le rayonnement électromagnétique pratiquement sans réflexion.

11. Filtre selon l'une des revendications 1, 4 et 8, dans lequel les moyens pour déplacer les surfaces comprennent au moins une source de tension (32;52; 54) appliquée auxdites surfaces en regard.

12. Filtre selon la revendication 11, dans lequel les surfaces sont pourvues d'électrodes qui sont reliées aux bornes de la source de tension.

13. Filtre selon la revendication 11, dans lequel le matériau constitutif des portions du corps est électriquement conducteur.

14. Filtre selon la revendication 3 ou 5, dans lequel la somme des distances séparant chaque couple de surfaces en regard est sensiblement égale à $\lambda_0/2$ où $\lambda_0$ est la longueur d'onde du gaz.

15. Filtre selon la revendication 1, dans lequel les moyens pour limiter l'adhérence comprennent des butées mécaniques (30;56;58;80;82) solidaires de l'une et/ou de l'autre des surfaces en regard.

16. Filtre selon la revendication 1, dans lequel les moyens pour limiter l'adhérence sont formés par des revêtements (34) adaptés déposés sur l'une et/ ou l'autre des surfaces en regard.

17. Filtre selon la revendication 1, dans lequel les moyens pour limiter l'adhérence sont formés par une rugosité prédéterminée conférée à l'une et/ou à l'autre des surfaces en regard.

18. Filtre selon l'une des revendications 2, 5, 6, 9 et 10, dans lequel les surfaces sont revêtues d'une couche antireflet (60,62,64,66).

19. Filtre selon l'une des revendications 1 à 18, dans lequel le rayonnement électromagnétique est de préférence optique.

20. Dispositif (10) de détermination d'une concentration d'au moins un gaz, comprenant :

- une source (12) d'un rayonnement électromagnétique qui présente une absorption sélective vis à vis de longueurs d'ondes de gaz,
- une cellule (14) contenant ledit gaz et qui est traversée par le rayonnement,
- un filtre (16;40) recevant le rayonnement dont la densité spectrale a été modifiée par le gaz,
- un détecteur (18) du rayonnement filtré mesurant l'énergie dudit rayonnement,
- et des moyens pour déterminer la concentration du gaz à partir de deux mesures de l'énergie dont l'une sert de valeur de référence,

**caractérisé en ce que** le filtre (16;40) est conforme à l'une des revendications 1 à 19.

**Patentansprüche**

1. Fabry-Pérot Filter (16 ;40) für eine elektromagnetische Strahlung mit einer spektralen durch Gas modifizierten Dichte, mit einem Körper (20 ; 42), der zumindest in seinem von der Strahlung durchquerten Teil durchlässig für die besagte elektromagnetische Strahlung ist, wobei der besagte Teil mindestens zwei Abschnitte umfasst, welche zwei sich gegenüberliegende, wesentlich flache und zueinander parallele Flächen (22a ; 24a ; 44a ; 46a) aufweist, welcher zwischen sich einen Hohlraum (28) mit einer Dicke $e_0$ bestimmen, der einer ersten, sogenannten Endstellung der beiden gesagten Flächen entspricht, wobei einer der besagten Abschnitte, erster Abschnitt genannt (22 ;44) in einer zu dem sich gegenüberliegenden Flächenpaar (22a ;24a ;44a ; 46a) wesentlich senkrechten Richtung beweglich ist und Mittel (32, 52-54), um die besagten sich gegenüberliegenden Flächen (22a ; 24a) zwischen zwei Stellungen unter der Wirkung eines elektromagnetischen Feldes zu verschieben, **dadurch gekennzeichnet, dass** der Filter ferner Mittel (30, 56) zur Begrenzung der Haftung zwischen diesen Flächen in der zweiten Endstellung, in welcher die besagten Flächen in einem schwachen Abstand vor der durchschnittlichen Wellenlänge der sie durchquerenden Strahlung von einander sind.

2. Filter nach dem Anspruch 1, in dem jeder Abschnitt (22,24) eine Fläche (22b,24b) besitzt, welche gegenüber von der Fläche (22a,24a) des Abschnittes, der Teil des sich gegenüberliegenden Flächenpaars ist, und wobei die besagen gegenüberliegenden Flächen (22b,24b) der beiden Abschnitte so behandelt sind, dass sie die elektromagnetische Strahlung quasi ohne Rückstrahlung übertragen.

3. Filter nach dem Anspruch 1 oder 2, mit einem dritten Abschnitt (48) des Körpers, welcher eine Fläche (48) besitzt, die sich gegenüber von der Fläche (44b) des ersten Abschnittes befindet, welche der Fläche (44a) des besagten ersten Abschnittes gegenüberliegt, welcher Teil des ersten sich gegenüberliegenden Flächenpaars (44a,46a) ist, wobei die sich gegenüberliegenden Flächen (44b,48a) des ersten und dritten Abschnittes ein zweites sich gegenüberliegendes wesentlich flaches und zueinander paralleles Flächenpaar bilden.

4. Filter nach dem Anspruch 3, mit Mitteln (54), um die besagte gegenüberliegende Fläche (44b) des besagten ersten Abschnittes (44) und die gegenüberliegende Fläche (48a) des dritten Abschnittes (48) zwischen zwei Endstellungen unter der Wirkung eines elektromagnetischen Feldes zu verschieben, und mit Mitteln (58), um die Haftung zwischen diesen Flächen in mindestens einer dieser Stellungen zu begrenzen.

5. Filter nach den Ansprüchen 3 und 4, in dem die sich gegenüberliegenden Flächen (44b,48a) der ersten und dritten Abschnitte so behandelt sind, dass sie die elektromagnetische Strahlung quasi ohne Rückstrahlung übertragen.

6. Filter nach den Ansprüchen 3 bis 5, in dem die zweiten (46) und dritten (48) Abschnitte jeweils eine Fläche (46b,48b) besitzen, die der Fläche (46a,48a) des besagten entsprechenden Abschnittes, der Teil eines der sich gegenüberliegenden Flächenpaares ist, gegenüberliegt, und wobei die gegenüberliegenden Flächen (46b,48b) der zweiten und dritten Abschnitte so behandelt sind, dass sie die elektromagnetische Strahlung quasi ohne Rückstrahlung übertragen.

7. Filter nach dem Anspruch 1 oder 2, mit einem dritten Abschnitt (76) eines Körpers mit einer Fläche (76a), welche sich gegenüber von der Fläche (78a) des zweiten Abschnittes (78) befindet, welcher der Fläche (78b) des besagten zweiten Abschnittes, der Teil des ersten, sich gegenüberliegenden Flächenpaares (74a,78b) ist, gegenüberliegt, wobei die sich gegenüberliegenden Flächen (76a, 78a) der zweiten und dritten Abschnitte ein zweites, sich gegenüberliegendes, wesentlich flaches und zueinander paralleles Flächenpaar bilden, wobei der dritte Abschnitt (76) in einer zu den sich gegenüberliegenden Flächen senkrechten Richtung beweglich ist.

8.   Filter nach dem Anspruch 7 mit Mitteln, um die Fläche des dritten Abschnittes und die dem zweiten Abschnitt gegenüberliegende Fläche zwischen zwei Endstellungen unter der Wirkung eines elektromagnetischen Feldes zu verschieben, und mit Mitteln (82), um die Haftung zwischen diesen Flächen in mindestens einer der Stellungen zu begrenzen.

9.   Filter nach dem Anspruch 7 oder 8, bei dem die sich gegenüberliegenden Flächen (76a,78a) der zweiten und dritten Abschnitte so behandelt sind, dass sie die elektromagnetische Strahlung quasi ohne Rückstrahlung übertragen.

10.  Filter nach einem der Ansprüche 7 bis 9, bei dem die ersten (74) und dritten (76) Abschnitte jeweils eine Fläche (74b, 76b) besitzen, die dem entsprechenden Abschnitt gegenüberliegt, der Teil eines sich gegenüberliegenden Flächenpaares ist, und wobei die gegenüberliegenden Flächen (74b,76b) der ersten und dritten Abschnitte so behandelt sind, dass sie die elektromagnetische Strahlung quasi ohne Rückstrahlung übertragen.

11.  Filter nach einem der Ansprüche 1, 4 und 8, bei dem die Mittel zur Bewegung der Flächen mindestens eine auf den besagten Flächen angebrachte Stromquelle (32 ;52 ;54) umfassen.

12.  Filter nach dem Anspruch 11, bei dem die Flächen mit Elektroden versehen sind, welche an die Klemmen der Stromquelle angeschlossen sind.

13.  Filter nach dem Anspruch 11, bei dem der die Abschnitte des Körpers bildende Stoff elektrisch leitend ist.

14.  Filter nach dem Anspruch 3 oder 5, bei dem die Summe der Entfernungen, welche jeweils die sich gegenüberliegenden Flächenpaare trennen, wesentlich $\lambda_0/2$ beträgt, wobei $\lambda_0$ die Wellenlänge des Gases ist.

15.  Filter nach dem Anspruch 1, bei dem die Mittel zur Begrenzung der Haftung mechanische Anschläge (30 ;56 ;58 ;80 ;82) umfassen, die formschlüssig mit der einen und/oder der anderen der sich gegenüberliegenden Flächen verbunden ist.

16.  Filter nach dem Anspruch 1, bei dem die Mittel zur Begrenzung der Haftung durch angemessene Bezüge (34) gebildet sind, welche auf der einen und/oder der anderen sich gegenüberliegenden Fläche aufgetragen sind.

17.  Filter nach dem Anspruch 1, bei dem die Mittel zur Begrenzung der Haftung durch eine der einen und/oder der anderen sich gegenüberliegenden Fläche vorbestimmte verliehene Rauheit gebildet sind.

18.  Filter nach einem der Ansprüche 2, 5, 6, 9 und 10, bei dem die Flächen mit einer reflexmindernden Schicht (60, 62 64, 66) überzogen sind.

19.  Filter nach einem der Ansprüche 1 bis 18, bei dem die elektromechanische Strahlung vorzugsweise optisch ist.

20.  Vorrichtung (10) zur Bestimmung einer Konzentration von mindestens einem Gas mit

-    einer elektromagnetischen Strahlungsquelle (12), welche eine den Wellenlängen von Gas gegenüber selektive Absorption aufweist,
-    einer Zelle (14), welche das besagte Gas enthält und von der Strahlung durchquert wird,
-    einem Filter (16 ;40) welcher die Strahlung empfängt, deren spektrale Dichte durch das Gas modifiziert worden ist,
-    einem Detektor (18) für die filtrierte Strahlung, welcher die Energie der besagten Strahlung misst,
-    und Mitteln, um die Konzentration des Gases an Hand von zwei Energiemessungen zu bestimmen, von denen eine als Richtwert dient,

     **dadurch gekennzeichnet, dass** der Filter (16;40) mit einem der Ansprüche 1 bis 19 übereinstimmt.

**Claims**

1.   A filter (16; 40) of the Fabry-Pérot type for filtering electromagnetic radiation having spectral density that is modified by a gas, the filter comprising a body (20; 42) which is transparent to said electromagnetic radiation, at least in the part thereof through which the radiation passes, said part comprising at least two portions possessing two mutually parallel and substantially plane facing surfaces (22a, 24a; 44a, 46a), and defining between them a cavity (28) of thickness $e_0$ corresponding to a first position of said "extreme" surfaces, a "first" one of said portions (22; 44) being movable in a direction substantially perpendicular to the pair of facing surfaces (22a, 24a; 44a, 46a), and means (32, 54-54) for moving said facing surfaces (22a, 24a) between two extreme positions under the action of an electromagnetic field, the filter being **characterized in that** it further comprises means (30, 56) for limiting adhesion between said surfaces for the second extreme position in which said surfaces are at a distance apart that is small compared with the mean wavelength of the radiation passing through them.

2. A filter according to claim 1, in which each portion (22, 24) possesses a surface (22b, 24b) opposite from the surface (22a, 24a) of said portion that forms a part of the pair of facing surfaces, and said opposite surfaces (22b, 24b) of the two portions are treated in such a manner as to transmit the electromagnetic radiation with practically no reflection.

3. A filter according to claim 1 or 2, comprising a third body portion (48) possessing a surface (48) which is situated facing the surface (44b) of the first portion which is opposite from the surface (44a) of said first portion that forms a part of the first pair of facing surfaces (44a, 46a), the facing surfaces (44b, 48a) of the first and third portions forming a second pair of mutually parallel and substantially plane facing surfaces.

4. A filter according to claim 3, comprising means (54) for moving the opposite surface (44b) of the first portion (44) and the facing surface (48a) of the third portion (48) between two extreme positions under the action of an electromagnetic field, and means (58) for limiting adhesion between said surfaces for at least one of said positions.

5. A filter according to claims 3 and 4, in which the facing surfaces (44b, 48a) of the first and third portions are treated so as to transmit electromagnetic radiation with practically no reflection.

6. A filter according to claims 3 to 5, in which each of the second and third portions (46, 48) possesses a respective surface (46b, 48b) opposite to its surface (46a, 48a) that forms a part of one of the pairs of facing surfaces, with said opposite surfaces (46b, 48b) of the second and third portions being treated in such a manner as to transmit electromagnetic radiation with practically no reflection.

7. A filter according to claim 1 or 2, comprising a third body portion (76) possessing a surface (76a) situated facing the surface (78a) of the second portion (78) that is opposite from the surface (78b) of said second portion forming a part of the first pair of facing surfaces (74a, 78b), the facing surfaces (76a, 78a) of the second and third portions forming a second pair of mutually parallel and substantially plane facing surfaces, the third portion (76) being movable in a direction perpendicular to the facing surfaces.

8. A filter according to claim 7, comprising means for displacing the surface of the third portion and the opposite surface facing the second portion between two extreme positions under the action of an electromagnetic field, and means (82) for limiting adhesion between said surfaces, in at least one of said positions.

9. A filter according to claim 7 or 8, in which the facing surfaces (76a, 78a) of the second and third portions are treated in such a manner as to transmit the electromagnetic radiation with practically no reflection.

10. A filter according to any one of claims 7 to 9, in which each of the first and third portions (74, 76) possesses a respective surface (74b, 76b) that is opposite to its surface forming a part of a pair of facing surfaces, with said opposite surfaces (74b, 76b) of the first and third portions being treated in such a manner as to transmit the electromagnetic radiation with practically no reflection.

11. A filter according to any one of claims 1, 4, and 8, in which the means for displacing the surfaces comprise at least one source of voltage (32; 52; 54) applied to said facing surfaces.

12. A filter according to claim 11, in which the surfaces are provided with electrodes which are connected to the terminals of the voltage source.

13. A filter according to claim 11, in which the material constituting the body portions is electrically conductive.

14. A filter according to claim 3 or 5, in which the sum of the distances between each pair of facing surfaces is substantially equal to $\lambda_0/2$, where $\lambda_0$ is the wavelength of the gas.

15. A filter according to claim 1, in which the means for limiting adhesion comprise mechanical abutments (30; 56; 58; 80; 82) secured to one or both of the facing surfaces.

16. A filter according to claim 1, in which the means for limiting adhesion are formed by appropriate coatings (34) deposited on one or both of the facing surfaces.

17. A filter according to claim 1, in which the means for limiting adhesion are formed by predetermined roughness imparted to one or both of the facing surfaces.

18. A filter according to any one of claims 2, 5, 6, 9, and 10, in which the surfaces are coated in an antireflection layer (60, 62, 64, 66).

19. A filter according to any one of claims 1 to 18, in which the electromagnetic radiation is preferably optical.

20. A device (10) for determining a concentration of at least one gas, the device comprising:

· a source (12) of electromagnetic radiation which presents selective absorption relative to wavelengths of the gas;
· a cell (14) containing said gas and having the radiation passing therethrough;
· a filter (16; 40) receiving the radiation whose spectral density has been modified by the gas;
· a detector (18) for detecting the filtered radiation to measure the energy of said radiation; and
· means for determining the concentration of the gas on the basis of two energy measurements, one of which serves as a reference value,

the device being **characterized in that** the filter (16; 40) is in accordance with any one of claims 1 to 19.

FIG. 1a

FIG. 1b

FIG. 1c

FIG. 1d

FIG. 1e

ART ANTERIEUR

FIG. 2

FIG. 3a

FIG. 3b

FIG. 3c

FIG. 3d

FIG. 4

FIG. 4a

FIG. 4b

EP 0 876 594 B1

**FIG. 4c**

**FIG. 4d**

FIG. 5

FIG. 5a

FIG. 5b

FIG. 5c

FIG. 5d

FIG. 6

FIG. 6a

FIG. 6b